# EUROPÄISCHE PATENTSCHRIFT

(11) **EP 1 561 614 B1**
(45) Veröffentlichungstag und Bekanntmachung des Hinweises auf die Patenterteilung: **09.07.2008**
(21) Anmeldenummer: 05001202.0
(22) Anmeldetag: 21.01.2005
(51) Int. Cl.: B60G 21/055, B60G 17/015

(54) **Steuersystem für eine aktive Fahrwerkstabilisierung**
Control system for an active suspension stabilisation
Système de contrôle pour une stabilisation active de suspension

(30) Priorität: 04.02.2004 DE 202004001668 U
(43) Veröffentlichungstag der Anmeldung: 10.08.2005
(73) Patentinhaber: TRW Automotive GmbH, 73553 Alfdorf (DE)
(72) Erfinder: Nissing, Dirk, Dr., 47506 Neukirchen-Vluyn (DE)
(74) Vertreter: Strass, Jürgen

(56) Entgegenhaltungen:
- WO-A-96/27508
- DE-A1- 10 213 156
- GB-A- 2 349 368
- US-A- 5 735 540
- US-B1- 6 179 310

## Beschreibung

Die Erfindung betrifft ein Steuersystem für eine aktive Fahrwerkstabilisierung eines Fahrzeugs, mit wenigstens einem an einen Stabilisator des Fahrzeugs gekoppelten, hydraulisch betriebenen Aktuator und einer Pumpe.

Derzeit werden verschiedene Konzepte für eine aktive Fahrwerkstabilisierung verfolgt, gemäß denen entweder die Fahrzeug-Federung selektiv beeinflußt oder die Stabilisatoren des Fahrzeugs gezielt ausgelenkt werden. Bei hydraulischen Systemen, die als wesentliche Komponenten eine hydraulische Pumpeneinheit, einen Ventilblock und hydraulisch betriebene Aktuatoren umfassen, sind jedoch lange Schlauchleitungen notwendig, die sich über einen erheblichen Teil der Fahrzeuglänge erstrecken. Außerdem kann es Schwierigkeiten bereiten, Fluidverluste auszugleichen.

Aus der US-A-5 735 540 ist ein hydraulisches Steuersystem für eine aktive Fahrwerkstabilisierung eines Fahrzeugs mit den Merkmalen des Oberbegriffs des Anspruchs 1 bekannt. Das system verfügt über eine vom Fahrzeugmotor angetriebene Hydraulikpumpe und ein komplexes Steuerventil, mit dem der Vorderachse und der Hinterasche zugeornete Aktuatoren betrieben werden.

Die Erfindung schafft ein Steuersystem für eine aktive Fahrwerkstabilisierung, das eine Reduzierung der Länge der Schlauchleitungen ermöglicht.

Gemäß der Erfindung ist bei einem Steuersystem der eingangs genannten Art vorgesehen, daß die Pumpe über eine Fahrwerkstabilisierungs-Steuereinheit angesteuert wird und der Aktuator unter Bildung eines geschlossenen hydraulischen Kreislaufs an die Pumpe angeschlossen ist. Ein Steuersystem mit einem geschlossenen hydraulischen Kreislauf benötigt nur verhältnismäßig kurze Schlauchleitungen, insbesondere wenn für den vorderen und den hinteren Fahrzeugbereich separate Aktuatoren mit eigenen hydraulischen Kreisläufen vorgesehen sind, die verhältnismäßig leicht zu kontrollieren sind.

Vorzugsweise ist der Aktuator über zwei separate Leitungen an einen Druck- und einen Sauganschluß der Pumpe angeschlossen.

Ein flexibler und dabei einfacher Aktuatorbetrieb ergibt sich dadurch, daß die Pumpe einen ersten und einen zweiten Anschluß aufweist und reversibel betrieben werden kann, so daß in einem ersten Betriebsmodus der Pumpe der erste Anschluß einen Druckanschluß und der zweite Anschluß einen Sauganschluß und in einem zweiten Betriebsmodus der erste Anschluß einen Sauganschluß und der zweite Anschluß einen Druckanschluß darstellt. So können durch entsprechende Ansteuerung mit nur einer Pumpe Aktuatorbewegungen in zwei entgegengesetzten Richtungen erreicht werden.

Gemäß einer bevorzugten Ausführungsform der Erfindung ist die Pumpe Teil eines vormontierten Motor/Pumpen-Aggregats, das ferner einen Antriebsmotor und eine elektronische Steuereinheit umfaßt. Bei einem solchen kompakt herstellbaren Motor-Pumpen-Aggregat werden die bisher notwendige hydraulische Pumpeneinheit sowie der Ventilblock vollständig durch die Steuereinheit ersetzt.

Die Fahrwerkstabilisierungs-Steuereinheit kann mit der Steuereinheit des Motor/Pumpen-Aggregats über einen lokalen CAN-Bus verbunden oder alternativ in die Steuereinheit des Motor/Pumpen-Aggregats integriert sein.

Durch thermische Volumenänderung bedingte oder durch Elastizitäten, insbesondere in den Schlauchleitungen, hervorgerufene Fluidverluste lassen sich vorteilhaft durch einen an den hydraulischen Kreislauf angeschlossenen hydraulischen Akkumulator ausgleichen.

Zur Überwachung der Motorkraft kann ein elektrisch mit der Fahrwerkstabilisierungs-Steuereinheit verbundener, an den hydraulischen Kreislauf angeschlossener Druckwandler vorgesehen sein.

Als Aktuator für die Auslenkung des Stabilisators kann insbesondere ein in der Mitte des Stabilisators angeordneter Schwenkmotor verwendet werden.

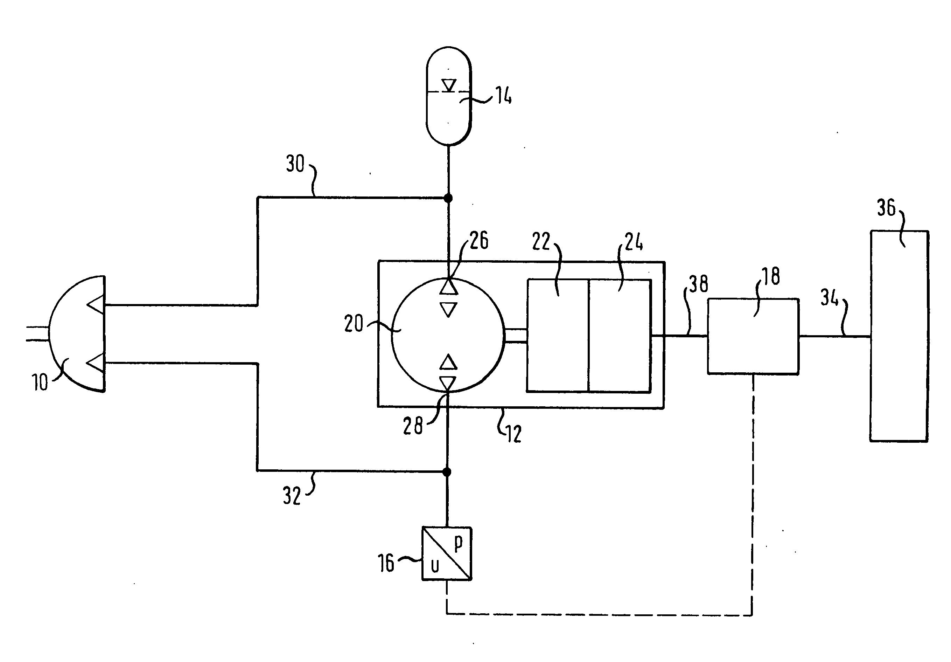

Weitere Merkmale und Vorteile der Erfindung ergeben sich aus der nachfolgenden Beschreibung und aus der beigefügten Zeichnung, auf die Bezug genommen wird. In der Zeichnung zeigt die einzige Figur ein hydraulisches Schaltdiagramm eines erfindungsgemäßen Steuersystems für eine aktive Fahrwerkstabilisierung.

Die wesentlichen Komponenten des in der Figur dargestellten Steuersystems sind ein hydraulisch betriebener Drehaktuator 10, ein Motor/Pumpen-Aggregat 12, ein hydraulischer Akkumulator 14, ein Druckwandler 16 und eine Fahrwerkstabilisierungs-Steuereinheit 18.

Das an sich bekannte Motor/Pumpen-Aggregat 12 ist eine kompakte, vormontierte Baueinheit, die eine Pumpe 20, einen Antriebsmotor 22 und eine elektronische Steuereinheit 24 umfaßt. Die Pumpe 20 hat zwei mit dem Drehaktuator 10 verbundene Anschlüse 26, 28 und kann reversibel betrieben werden, d.h. die Pumpenanschlüsse 26 und 28 können entweder als Druck- bzw. Saug- oder als Saug- bzw. Druckanschluß betrieben werden. Die Steuerung des Antriebsmotors 22 übernimmt die im Motor/Pumpen-Aggregat 12 untergebrachte elektronische Steuereinheit 24.

Der Drehaktuator 10 ist vorzugsweise ein Schwenkmotor, der an einen (nicht gezeigten) Stabilisator des Fahrzeugs gekoppelt ist. Der Drehaktuator 10 ist in der Mitte des Stabilisators angeordnet und in der Lage, den Stabilisator in begrenztem Maße um eine zur Fahrtrichtung des Fahrzeugs parallele Achse zu drehen. Aufgrund der Reversibilität der Pumpe 20 kann die Drehung des Stabilisators mit Hilfe des Drehaktuators 10 je nach Bedarf im oder gegen den Uhrzeigersinn erfolgen.

Die in der Figur gezeigte, über die beiden separaten Leitungen 30, 32 hergestellte Verbindung des Drehaktuators 10 mit den beiden Pumpenanschlüssen 26, 28 stellt einen geschlossenen hydraulischen Kreislauf dar, wobei der an den Kreislauf angeschlossene "vorgeladene" (d.h. unter Druck stehende) hydraulische Akkumulator 14 im Betrieb oder sonstige über die Zeit auftretende geringfügige Fluidverluste ausgleicht. In der Regel ist ein Fluidvolumen des Akkumulators von weniger als 0,2 1 ausreichend.

Der ebenfalls mit dem hydraulischen Kreislauf verbundene Druckwandler 16 überwacht die Motorkraft und übergibt diese als Kontrollwert an die Fahrwerkstabilisierungs-Steuereinheit 18. Die Fahrwerkstabilisierungs-Steuereinheit 18 ist einerseits über einen Fahrzeug-Bus 34 mit den ohnehin vorhandenen Fahrzeugsensoren 36 und andererseits über einen lokalen Bus 38 oder auch direkt mit der Steuereinheit 24 des Motor/Pumpen-Aggregats 12 verbunden. Abhängig vom jeweiligen Zustand des Fahrwerkstabilisierungs-Systems und/oder des Fahrzeugs steuert die Fahrwerkstabilisierungs-Steuereinheit 18 das Motor/Pumpen-Aggregat 12, welches dann eine entsprechende Drehung des Drehaktuators 10 veranlaßt.

Gemäß einer alternativen Ausführungsform der Erfindung sind die Fahrwerkstabilisierungs-Steuereinheit 18 und die Steuereinheit 24 des Motor/PumpenAggregats 12 zu einer einzigen, in das Motor/Pumpen-Aggregat 12 integrierten Steuereinheit zusammengefaßt, so daß die Verbindung zwischen diesen beiden Steuereinheiten entfällt.

## Patentansprüche

1. Steuersystem für eine aktive Fahrwerkstabilisierung eines Fahrzeugs, mit wenigstens einem an einen Stabilisator des Fahrzeugs gekoppelten, hydraulisch betriebenen Aktuator (10) und einer Pumpe (20), **dadurch gekennzeichnet, daß** die Pumpe (20) über Fahrwerkstabilisierungs-Steuer einheit (18) angesteuert wird und der Aktuator (10) unter Bildung eines geschlossenen hydraulischen Kreislaufs an die Pumpe (20) angeschlossen ist.

2. Steuersystem nach Anspruch 1, **dadurch gekennzeichnet, daß** der Aktuator (10) über zwei separate Leitungen (30, 32) an einen Druck- und einen Sauganschluß der Pumpe (20) angeschlossen ist.

3. Steuersystem nach Anspruch 2, **dadurch gekennzeichnet, daß** die Pumpe (20) einen ersten und einen zweiten Anschluß (26) bzw. (28) aufweist und reversibel betrieben werden kann, so daß in einem ersten Betriebsmodus der Pumpe (20) der erste Anschluß (26) einen Druckanschluß und der zweite Anschluß (28) einen Sauganschluß und in einem zweiten Betriebsmodus der erste Anschluß (26) einen Sauganschluß und der zweite Anschluß (28) einen Druckanschluß darstellt.

4. Steuersystem nach einem der vorhergehenden Ansprüche, **dadurch gekennzeichnet, daß** die Pumpe (20) Teil eines vormontierten Motor/Pumpen-Aggregats (12) ist, das ferner einen Antriebsmotor (22) und eine elektronische Steuereinheit (24) umfaßt.

5. Steuersystem nach Anspruch 4, **dadurch gekennzeichnet, daß** die Fahrwerkstabilisierungs-Steuereinheit (18) mit der Steuereinheit (24) des Motor/Pumpen-Aggregats (12) über einen lokalen Bus (38) verbunden ist.

6. Steuersystem nach einem der Ansprüche 1 bis 4, **dadurch gekennzeichnet, daß** die Fahrwerkstabilisierungs-Steuereinheit (18) in die Steuereinheit (24) des Motor/Pumpen-Aggregats (12) integriert ist.

7. Steuersystem nach einem der vorhergehenden Ansprüche, **dadurch gekennzeichnet, daß** ein hydraulischer Akkumulator (14) an den hydraulischen Kreislauf angeschlossen ist.

8. Steuersystem nach einem der vorhergehenden Ansprüche, **dadurch gekennzeichnet, daß** ein elektrisch mit der Fahrwerkstabilisierungs-Steuereinheit verbundener Druckwandler (16) an den hydraulischen Kreislauf angeschlossen ist.

9. Steuersystem nach einem der vorhergehenden Ansprüche, **dadurch gekennzeichnet, daß** der Aktuator (10) ein in der Mitte des Stabilisators angeordneter Schwenkmotor ist.

## Claims

1. A control system for an active chassis stabilization of a vehicle, comprising at least one hydraulically operated actuator (10) coupled to a stabilizer of the vehicle, and a pump (20), **characterized in that** the pump (20) is controlled by a chassis stabilization control unit (18) and the actuator (10) is connected to the pump (20) to form a closed hydraulic circuit.

2. The control system according to claim 1, **characterized in that** the actuator (10) is connected to a pressure port and a suction port of the pump (20) via two separate lines (30, 32).

3. The control system according to claim 2, **characterized in that** the pump (20) has first and second ports (26) and (28), respectively, and can be operated reversibly, so that in a first operating mode of the pump (20) the first port (26) constitutes a pressure port and the second port (28) constitutes a suction port, and in a second operating mode the first port (26) constitutes a suction port and the second port (28) constitutes a pressure port.

4. The control system according to any of the preceding claims, **characterized in that** the pump (20) is part of a pre-assembled motor/pump unit (12), which further comprises a drive motor (22) and an electronic control unit (24).

5. The control system according to claim 4, **characterized in that** the chassis stabilization control unit (18) is connected with the control unit (24) of the motor/pump unit (12) by a local bus (38).

6. The control system according to any of claims 1 to 4, **characterized in that** the chassis stabilization control unit (18) is integrated in the control unit (24) of the motor/pump unit (12).

7. The control system according to any of the preceding claims, **characterized in that** a hydraulic accumulator (14) is connected to the hydraulic circuit.

8. The control system according to any of the preceding claims, **characterized in that** a pressure converter (16) which is electrically connected with the chassis stabilization control unit is linked to the hydraulic circuit.

9. The control system according to any of the preceding claims, **characterized in that** the actuator (10) is an oscillating motor arranged at the centre of the stabilizer.

## Revendications

1. Système de commande pour une stabilisation active de châssis d'un véhicule, comportant au moins un actionneur (10) à fonctionnement hydraulique accouplé à un stabilisateur du véhicule et une pompe (20), **caractérisé en ce que** la pompe (20) est pilotée via une unité de commande de stabilisation de châssis (18), et **en ce que** l'actionneur (10) est branché à la pompe (20) en formant un circuit hydraulique fermé.

2. Système de commande selon la revendication 1, **caractérisé en ce que** l'actionneur (10) est branché via deux conduites (30, 32) séparées à un raccord de refoulement et à un raccord d'aspiration de la pompe (20).

3. Système de commande selon la revendication 2, **caractérisé en ce que** la pompe (20) présente un premier raccord (26) et un deuxième raccord (28) et peut fonctionner de façon réversible, de telle sorte que dans un premier mode de fonctionnement de la pompe (20), le premier raccord (26) constitue un raccord de refoulement et le deuxième raccord (26) constitue un raccord d'aspiration et dans un deuxième mode de réalisation, le premier raccord (26) constitue un raccord d'aspiration et le deuxième raccord (28) constitue un raccord de refoulement.

4. Système de commande selon l'une des revendications précédentes, **caractérisé en ce que** la pompe (20) fait partie d'une unité moteur/pompe (12) préassemblée qui comprend en outre un moteur d'entraînement (22) et une unité de commande électronique (24).

5. Système de commande selon la revendication 4, **caractérisé en ce que** l'unité de commande de stabilisation de châssis (18) est reliée à l'unité de commande (24) de l'unité moteur/pompe (12) par un bus (38) local.

6. Système de commande selon l'une des revendications 1 à 4, **caractérisé en ce que** l'unité de commande de stabilisation de châssis (18) est intégrée dans l'unité de commande (24) de l'unité moteur/pompe (12).

7. Système de commande selon l'une des revendications précédentes, **caractérisé en ce qu'**un accumulateur (14) hydraulique est branché au circuit hydraulique.

8. Système de commande selon l'une des revendications précédentes, **caractérisé en ce qu'**un convertisseur de pression (16) relié électriquement à l'unité de commande de stabilisation de châssis est branché au circuit hydraulique.

9. Système de commande selon l'une des revendications précédentes, **caractérisé en ce que** l'actionneur (10) est un moteur oscillant agencé au milieu du stabilisateur.
